(19) Europäisches Patentamt
European Patent Office
Office européen des brevets

(11) **EP 4 749 510 A1**

(12) **EUROPEAN PATENT APPLICATION**

(43) Date of publication:
27.05.2026 Bulletin 2026/22

(21) Application number: 25213104.0

(22) Date of filing: 03.11.2025

(51) International Patent Classification (IPC):
$G06F\ 30/27^{(2020.01)}$  $G06F\ 30/33^{(2020.01)}$
$G06F\ 30/367^{(2020.01)}$  $G06F\ 119/04^{(2020.01)}$

(52) Cooperative Patent Classification (CPC):
G06F 30/27; G06F 30/33; G06F 30/367;
G06F 2119/04

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 22.11.2024 IT 202400026370

(71) Applicant: STMicroelectronics International N.V.
1228 Plan-les-Ouates, Geneva (CH)

(72) Inventors:
• RUNDO, Francesco
I-95030 Gravina di Catania (Catania) (IT)

• CASTAGNOLO, Giulia
I-95036 Randazzo (Catania) (IT)
• PINO, Carmelo
I-95121 Catania (IT)
• SPAMPINATO, Concetto
I-95100 Catania (IT)
• CALABRETTA, Michele
I-95014 Giarre (Catania) (IT)
• MESSINA, Angelo Alberto
I-95128 Catania (IT)
• COFFA, Salvatore
I-20147 Milano (IT)

(74) Representative: Buzzi, Notaro & Antonielli d'Oulx
S.p.A.
Corso Vittorio Emanuele II, 6
10123 Torino (IT)

(54) **ARTIFICIAL NEURAL NETWORK PROCESSING METHODS AND SYSTEMS FOR PROVIDING SEMICONDUCTOR DEVICE PARAMETERS**

(57) A method, comprising: providing a set of measured characteristic curves values (MS) of an electronic device having a control node and a current flow path therethrough between a first current node and a second current node, the measured characteristic curves values (MS) comprising measured electric current values through the current flow path as a function of electric voltage values across first and second current nodes with a set of control voltage levels applied at said control node of the semiconductor device (10); applying an artificial neural network, ANN processing pipeline (30) to the set of measured characteristic curves values (MS), obtaining a set of reconstructed physical parameter values of the semiconductor device (10) as a result. The ANN processing pipeline (30) comprises a plurality of ANN processing stages (340, 342, 343, 344, 346, 347, 348) each having at least one respective set of ANN processing weights (W1, W2, W3, W4, W5, W6; WG). The method further comprises: computing reconstructed characteristic curves values of the semiconductor device (10) based on the set of reconstructed physical parameter values and a set of device modeling equations; performing a comparison (36) of reconstructed characteristic curves values and measured characteristic curves values (MS), and based on the performed comparison, providing an indicator (D) of a variation of physical values of the semiconductor device (10).

**(Cont. next page)**

EP 4 749 510 A1

# FIG. 3

**Description**

Technical field

The description relates to a method of computing the parameters of a known model underlying a physical system, such as an integrated circuit or semiconductor device.
One or more embodiments may be applied to tracking an evolution over time of the parameters of an integrated circuit, thereby facilitating assessing device reliability.

Background

The performance of transistors in integrated circuits and electronic devices can vary over their lifetime and it may impact the overall performance of the system in which they are embedded.
Therefore, there is an interest in being able to detect drifts in the parameters of a transistor with respect to the design parameters.
One way to theoretically retrieve the values of physical parameters from the observation of the behavior of a system is currently referred to as "inverse modeling". Existing approaches to inverse modeling for transistors are discussed in the following documents:

T. Patel: "Comparison of level 1, 2 and 3 mosfet's", Course: Advanced Electronics, Department of Electrical Engineering, The University of Texas, Arlington, 2014 discusses existing models for transistors;
K. Jeppson: "A learning tool MOSFET model: A stepping-stone from the square-law model to BSIM4," 2013 23rd International Workshop on Power and Timing Modeling, Optimization and Simulation (PATMOS), Karlsruhe, Germany, 2013, pp. 39-44, doi: 10.1109/PATMOS.2013.6662153 discusses a physics-based learning tool MOSFET model is presented based on three model parameters in each of the two regions of strong inversion operation; the model is useful both for small-signal parameter calculations in the analog bias region and for calculation of large-signal currents during logic gate transients;
A. Lakhlef and A. Benfdila: "Drain current modelling in silicon MOSFETs," 2014 29th International Conference on Microelectronics Proceedings - MIEL 2014, Belgrade, Serbia, 2014, pp. 213-216, doi: 10.1109/MIEL.2014.6842124 discusses the modeling of silicon MOSFET in the variety of channel range from submicron to nanoMOSFET aiming the study of the degradation and aging of MOSFET transistor used in VLSI Integrated circuits, where the model is expressed as current versus voltage in the possible full range of gate voltage and meant to comply with the unified current model.
C. Leonardi et al.: "A new power MOSFET model including the variation of parameters with the temperature" Proceedings of the 1998 Second IEEE International Caracas Conference on Devices, Circuits and Systems 98, On the 70th Anniversary of the MOSFET and 50th of the BJT, Isla de Margarita, Venezuela, 1998, pp. 261-266, doi: 10.1109/ICCDCS.1998.705845 discusses a new PSpice model of aiming to account for the parameter variations with temperature, reporting static and dynamic validation tests at different working temperatures in the range 25-150/spl deg/C on actual devices.
Spata, Massimo O. et al. "Deep learning algorithm for advanced level-3 inverse-modeling of silicon-carbide power MOSFET devices." Workshop on Electronics Communication Engineering (2023)) discusses deep learning algorithms involves training deep architecture to predict device's parameters from its static behaviour, in particulare a deep learning method trained for retrieving physical parameters of Level-3 model of Power Silicon-Carbide MOSFET (SiC Power MOS).
J. E. Suseno et al.: "Artificial intelligence techniques for SPICE optimization of MOSFET modeling," 2009 Innovative Technologies in Intelligent Systems and Industrial Applications, Kuala Lumpur, Malaysia, 2009, pp. 76-80, doi: 10.1109/CITISIA.2009.5224238 discusses a new method for optimizing and verifying electric characterization graph of MOSFET by using artificial neural network, comparing current-voltage (I-V) Characteristic graph between the TCAD simulation and TSPICE modeling as desire data control a model parameter.

US 2024/0119274 A1 discusses a method of selecting an initial weight vector for a convex optimization subproblem associated with a neural network having a non-convex network architecture loss surface.
Existing approaches may present one or more of the following drawbacks:

represent a general-purpose system, therefore failing to capture the complex behavior of modern transistor devices, such as transistors based on silicon carbide (SiC) technology;
reduced performance in terms of computational burden;
limited adaptability to various contexts.

Object and summary

An object of one or more embodiments is to contribute in overcoming the aforementioned drawbacks.

According to one or more embodiments, that object can be achieved via a method having the features set forth in the claims that follow.

One or more embodiments may relate to a corresponding system, such as a microcontroller.

One or more embodiments may include a computer program product loadable in the memory of at least one processing circuit (e.g., a computer) and including software code portions for executing the steps of the method when the product is run on at least one processing circuit. As used herein, reference to such a computer program product is understood as being equivalent to reference to a computer-readable medium containing instructions for controlling the processing system in order to co-ordinate implementation of the method according to one or more embodiments. Reference to "at least one computer" is intended to highlight the possibility for one or more embodiments to be implemented in modular and/or distributed form.

The claims are an integral part of the technical teaching provided herein with reference to the embodiments.

One or more embodiments exploit a Siamese-like architecture of an artificial neural network to facilitate computing a variety of parameters of a complex transistor device.

One or more embodiments facilitate on-run diagnostic of electronic components, e.g., via a microcontroller configured to perform the method as per the present disclosure.

One or more embodiments show the capability to address specific issues even in the absence of time-consuming trainings.

One or more embodiments show a high-adaptability thanks to the structure of the underlying artificial neural network.

Brief description of the several views of the drawings

One or more embodiments will now be described, by way of nonlimiting example only, with reference to the annexed Figures, wherein:

Figure 1 is a diagram exemplary of a method of measuring characteristic curves of an electronic device;
Figure 2 is a diagram exemplary of an evolution of characteristic curves obtained via the method exemplified in Figure 1;
Figure 3 is a diagram of a method as per the present disclosure;
Figure 4 is a diagram exemplary of a fully connected artificial neural network, ANN;
Figures 5 to 11 are diagrams exemplary of a comparison of the training test signals and signals computed based on parameters provided by the method exemplified in Figure 3.

Corresponding numerals and symbols in the different figures generally refer to corresponding parts unless otherwise indicated.

The figures are drawn to clearly illustrate the relevant aspects of the embodiments and are not necessarily drawn to scale.

The edges of features drawn in the figures do not necessarily indicate the termination of the extent of the feature.

Detailed description

In the ensuing description, one or more specific details are illustrated, aimed at providing an in-depth understanding of examples of embodiments of this description. The embodiments may be obtained without one or more of the specific details, or with other methods, components, materials, etc. In other cases, known structures, materials, or operations are not illustrated or described in detail so that certain aspects of embodiments will not be obscured.

Reference to "an embodiment" or "one embodiment" in the framework of the present description is intended to indicate that a particular configuration, structure, or characteristic described in relation to the embodiment is comprised in at least one embodiment. Hence, phrases such as "in an embodiment" or "in one embodiment" that may be present in one or more points of the present description do not necessarily refer to one and the same embodiment.

Moreover, particular conformations, structures, or characteristics may be combined in any adequate way in one or more embodiments.

The references used herein are provided merely for convenience and hence do not define the extent of protection or the scope of the embodiments.

For the sake of simplicity, in the following detailed description a same reference symbol may be used to designate both a node/line in a circuit and a signal which may occur at that node or line.

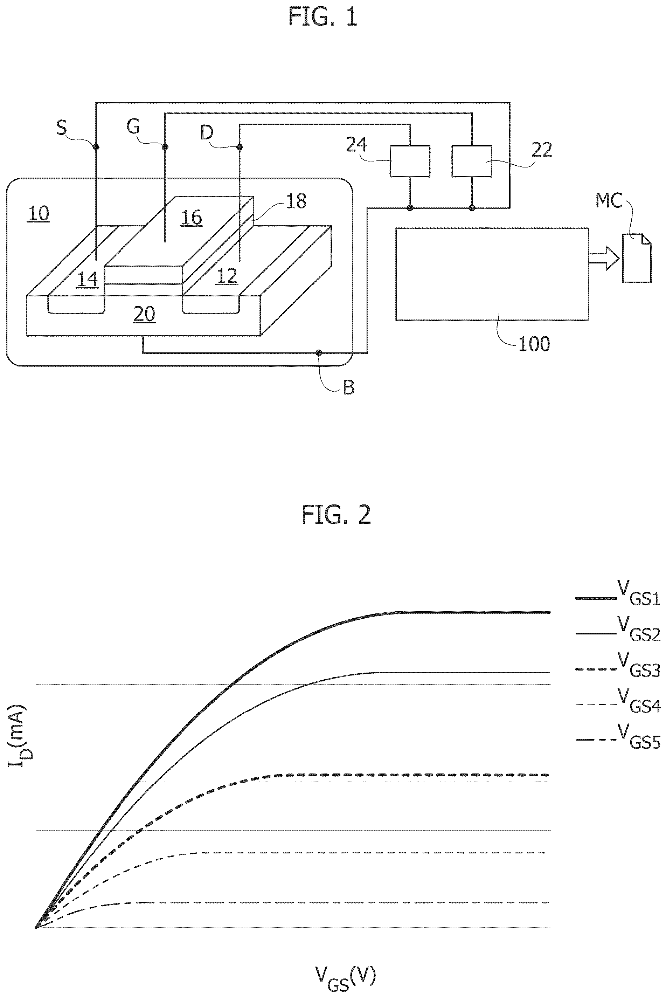

Figure 1 is a diagram exemplary of a method of measuring characteristic curves of a transistor device 10, per se known.

As exemplified in Figure 1, an exemplary MOSFET (metal-oxide-semiconductor field-effect transistor) comprises:

a substrate body 20 comprising a base layer which can be either n-type or p-type;
a source channel 12 and a drain channel 14 comprising two heavily doped regions (either n-type or p-type, depending on the type of MOSFET) that form the nodes through which current flows in the transistor;
a gate node G separated from the current-flow channel (the region between the source and drain) by a thin insulating layer 18.

As mentioned, the area between the source and drain where the conduction occurs is known as channel, and the type of channel (n-channel or p-channel) depends on the doping of the source and drain regions. The channel can be inverted by applying a voltage to the gate. The insulating layer provides electrical isolation between the gate and the channel, allowing the gate voltage to control the channel conductivity without direct electrical contact.

As exemplified in Figure 1, when a voltage is applied to the gate 16 (e.g., via gate node G), it creates an electric field that modifies the charge carrier concentration in the channel, allowing or preventing current flow between the source node S and drain node D. This principle of operation enables MOSFETs to function as switches or amplifiers in various electronic circuits, in a manner per se known.

Silicon Carbide (SiC) is a wide bandgap semiconductor suitable for operating at higher voltages, temperatures, and frequencies than silicon. This facilitates greater efficiency and reduced heat generation. Compared to traditional silicon MOSFETs are becoming increasingly popular in advanced power electronics thanks to their enhanced performance in high-voltage, high-temperature, and high-frequency applications.

As exemplified in Figure 1, the measurement arrangement comprises:

a first adjustable voltage source 22 coupled to the nodes of the transistor 10 to apply an adjustable voltage $V_{GS}$ across gate and source nodes as well as to vary a voltage drop $V_{DS}$ across drain-source nodes;
a detector 24 coupled across the drain node D and the source node S of transistor 10 and configured to sense an intensity of the drain current $I_D$;
a system 100 coupled to the adjustable voltage source 22 and to the detector 24, the system configured to drive the adjustable voltage source 22 to sweep a finite number of values for the adjustable voltage source 22 in a range of values of interest for the performance of the transistor 10, the system 100 further configured to store (e.g., in a digital file MC) the drain current values sensed via the current detector 24 as well as the corresponding applied voltage values $V_{GS}$, $V_{DS}$.

Figure 2 is a plot (drain-source voltage $V_{DS}$ on the ordinate axis in Volt units, drain current $I_D$ on the abscissa axis in Ampere units, each curve being indicative of a fixed level of gate-source voltage $V_{GS}$) of characteristic curves fitting the data stored (e.g., on digital file MC) by the system 100 after completing a sweep of applying adjustable voltage values $V_{GS}$, $V_{DS}$ in a given range to the transistor device 10.

The evolution of such characteristic curves can be modeled via various dedicated functions of physical parameters of the devices. Simulation tools such as the one sold under the commercial name of PSpice by Cadence Design Systems, Inc. exploit such functions to emulate the behavior of the real transistor device. The models used by the PSpice tool are known as Level-1, Level-2 and Level-3 PSpice models and vary in terms of complexity and accuracy.

For the sake of simplicity, one or more embodiments are discussed in the following mainly with reference to Pspice Level-3 model, being otherwise understood that such a model choice is purely exemplary and in no-way limiting. One or more embodiments may notionally operate with any Pspice model or any other simulator model of a transistor device.

A P-Spice Level-3 model for a (e.g., MOSFET) transistor includes several parameters that define the device's characteristics and behavior, comprising for instance:

threshold voltage VT which a minimum gate-to-source voltage that activates a conducting path between the source and drain terminals;
saturation voltage VDSat which is the value of the voltage drop across drain-source at which the transistor enters saturation;
transconductance KP: represents the change in drain current with respect to a change in gate-source voltage, indicating how effectively the transistor can amplify;
drain current Id: the current flowing from drain to source, influenced by the gate voltage and the characteristics of the transistor.

channel length L and width W which define the dimensions of the transistor channel, where an aspect ratio W/L affects the current-driving capability and transconductance;

body effect parameter $\gamma$: accounts for the impact of the substrate bias on the threshold voltage, especially in bulk CMOS technologies;

current gain $\beta$: the product of the transconductance KP and the width-to-length ratio W/L of the channels;

surface potential $\varphi$: the height of the barrier of potential leading to the inversion charge in the channel.

As appreciable to those of skills in the art, the list of parameters above is non-exhaustive while encompassing some of the most impactful parameters for the behavior of a transistor device 10.

For instance, the aforementioned parameters facilitate Pspice level-3 model to predict the electrical behavior of transistors accurately in various operating conditions, making it suitable for circuit design and analysis in both analog and digital applications.

Inventors have observed that by applying artificial neural network, ANN processing to the measured characteristic curves MS, it is possible to (indirectly) measure the values of at least some of the Pspice level-3 parameters (e.g., those listed above or others) for the specific transistor device under test 10.

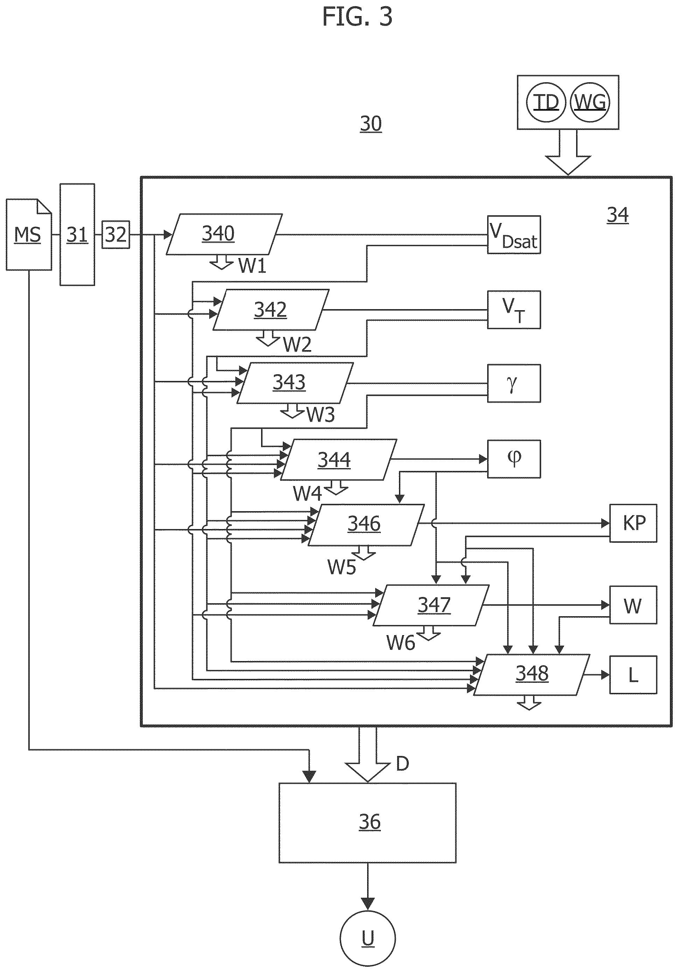

As exemplified in Figure 3, a system 30 for inverse-modeling of a transistor device 10 comprises:

providing the set of measurements MS of the drain current $I_D$ as a function of the gate-source voltage $V_{GS}$ and the drain-source voltage $V_{DS}$;

preferably, applying pre-processing 31 to the set of measurements MS, for instance generating an image 32 like the one exemplified in Figure 2 or reducing the number of characteristic curves in the data MS;

applying artificial neural network, ANN processing 34 to the set of measurements MS, providing a set of (e.g., level-3) model parameter values VDsat, VT, $\gamma$, $\varphi$, KP, W, L for the transistor device 10 from which the measured data MS was sensed;

preferably, applying post-processing 36 to the set of model parameter values VDsat, VT, $\gamma$, $\varphi$, KP, W, L, computing characteristic curves of the transistor device 10 via a given transistor model (e.g., level-3) and performing a comparison of the computed curves with the measured ones, providing to a user circuit U (e.g., a diagnosis circuit embedded on an integrated circuit or a memory for storage) a drift indicator D based on the comparison, the drift indicator D being indicative the evolution (over time) of physical parameters of the device 10.

For instance, the post-processing stage 36 may compute the characteristic curves by plugging the computed model parameter values VDs,...,VT into the following Pspice level-3 equations:

$$I_D = \begin{cases} \beta(V_{GS} - V_T)V_{DS} - (1 + F_B)\dfrac{V_{DS}^2}{2} \; if \; 0 \le V_{DS} \le V_{DSsat} \\[4mm] \dfrac{\beta}{2(1 + F_B)}(V_{GS} - V_T)^2 \; if \; V_{DS} \ge V_{DSsat} \end{cases}$$

For instance, the system 30 can reconstruct the model and parameters in about 60 milliseconds. As exemplified in Figure 3, the user circuit U can be configured to monitors the parameters over time and signals an alarm if it detects degradation, allowing for timely intervention. Such a feature may be useful, for instance, in the automotive sector or other safety-centered applications.

As exemplified in Figure 3, applying ANN processing 34 comprises applying an ANN processing pipeline comprising a plurality of ANN processing stages 340, 342, 343, 344, 346, 347, 348 each configured to compute one of the parameters in the set of parameters according to a daisy-chain topology in which the output of a i-th stage 340 is provided as input to the subsequent (i+1)-th stage together with training data TD (which comprises measurement data MS and/or known physical parameter values of the device under test).

As exemplified herein, the ANN processing stages 340, 342, 343, 344, 346, 347, 348 of the ANN processing chain 34 are further configured to perform "weight sharing", meaning that for each stage the training the weights of an i-th stage are initialized to the same value of the values reached at the end of training an (i-1)-th previous stage in the daisy chain line.

As exemplified herein, training the ANN stage may advantageously employ a technique (per se known) currently referred to as Jacobian regularization and discussed, for instance, in documents Hoffman, Judy et al.: "Robust Learning with Jacobian Regularization" (2019), ArXiv, abs 1908.02729 and Cui, C. et al: "Generalizing and Improving Jacobian and Hessian Regularization" (2022), ArXiv, abs/2212.00311.

As exemplified herein the training dataset for the ANN processing stage 34 can comprise even a single set of measurements performed on a single transistor device 10, thereby reducing computational complexity and facilitating implementation on micro-controllers or other edge-processing devices.

As exemplified herein, each ANN processing stage of the plurality of ANN processing stages 340, 342, 343, 344, 346, 347, 348 preferably comprises a feedforward or convolutional neural network architecture.

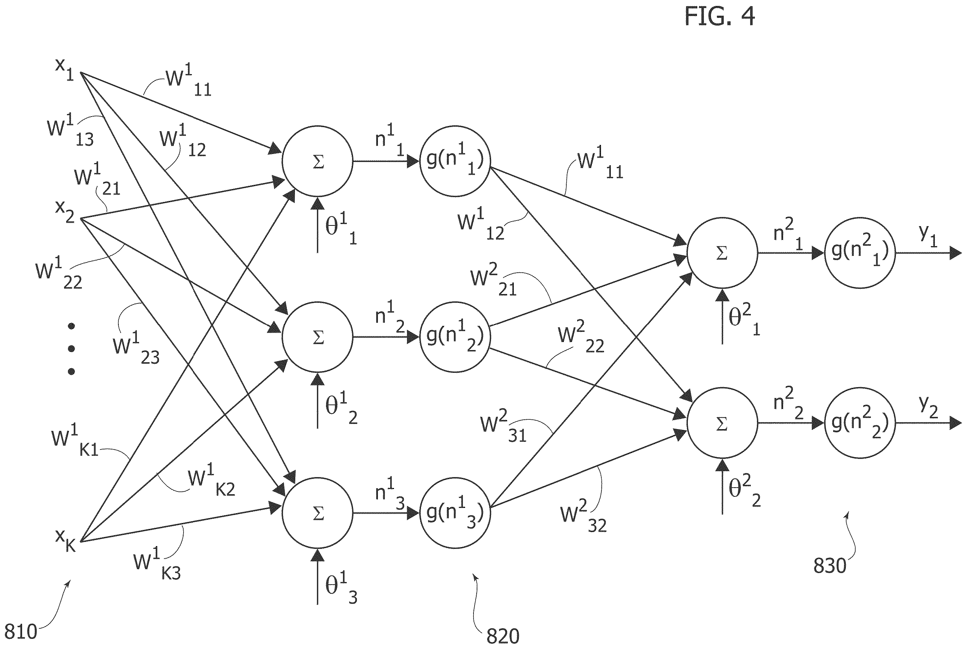

As exemplified in Figure 4, a feedforward ANN processing stage 800 comprises:

- an input layer 810, comprising input nodes x1, x2, ..., xK, for corresponding input values x1, x2, ..., xK;
- at least one hidden layer 820, comprising hidden layer summation nodes Σ, providing respective weighted sums of input values with respective weights w11, w22, ..., wk1, wk2 and hidden output nodes g(n11), g(n21), g(n31), and
- an output layer 830, comprising summation nodes Σ of values from previous layers with respective weights and output nodes y1, y2.

As exemplified in Figures 3 and 4, during a training phase a first processing stage 340 receives the set of measurements MS and applies ANN processing thereto, such as a regression with a feedforward network 800 or pattern recognition with a convolutional neural network processing; the weights w11, w22, ..., wk1, wk2 of the neurons of the network 800 may be varied in order to minimize a loss function with respect to training data TD which may be expressed as:

$$Log-cosh = \frac{1}{N}\sum_{i=1}^{N} \ln\left(\cosh\left(x_i\right)\right)$$

where $x_i = y_i - \widehat{y_i}$ represents a difference predicted values $y_i$ and ground truth values $\widehat{y_i}$

In the considered example, still during the training phase, once the loss function is minimized, a first set of weights W1 of the first processing stage 340 reach a stable set of values and provide an estimate of a first model parameter value, e.g., the saturation voltage VDsat.

As exemplified in Figure 3, still during the training phase, a second ANN processing stage 342 receives as input data both the measurement data MS and the first model parameter estimate VDsat and applies a second ANN processing thereto. Preferably, the values of a second set of weights W2 of the second ANN processing stage 342 are set to be equal to the stable values reached by the first set of weights W1. After this, the training is performed again in order to minimize a loss function (e.g., equal to the same aforementioned loss function for each stage in the ANN processing stage 34) until the second ANN processing stage provides a second model parameter estimate, e.g., threshold voltage value Vt.

As exemplified in Figure 3, the training process discussed in the foregoing in respect to first and second processing stages 340, 342 is iterated for each i-th ANN processing stage of the plurality of ANN processing stages 340, 342, 343, 344, 346, 348, 349. Therefore, the amount of input data provided to the first ANN processing stage 340 is minimum (comprising the measured data MS) while the amount of input data provided to the last ANN processing stage 349 is maximum (comprising measured data and all the estimated parameter values VDsat, Vt, γ, φ, KP, W save the last one L). Conversely, each processing stage receives a same amount of data regarding the initialization of the weight values.

Given the aforementioned processing layer, the input layer of a last processing stage (e.g., 348) of the processing chain may have an input layer with a number of input nodes greater than the number of input nodes of a first layer (e.g., 340) of the processing chain 34. Therefore, re-shaping processing may be used to adapt the output of each i-th layer to become the input of each (i+1)-th layer of the processing chain 34. Reshaping processing involves changing a shape of a tensor without altering the respective data and is known from, for instance, the documentation of a software tool known under the name of PyTorch 2.5 (e.g., see the function torch.reshape).

As exemplified in Figure 3, the final values reached at the end of the training phase by the weights W1, W2, W3, W4, W5, W6, W7 of each and every ANN processing stage of the plurality of ANN stages 340, 342, 343, 344, 346, 347, 348 are stored (e.g., in a memory as stored weights WG) for later use during an inference phase.

As exemplified herein, during the inference phase the daisy-chain ANN processing structure remains so that each i-th layer receives both the input measured data MS and the output of the previous (i-1)-th ANN processing stage while the weights are no longer shared as each and every ANN processing stage of the plurality of ANN stages 340, 342, 343, 344, 346, 347, 348 has the respective weight values loaded from memory to be equal to the stable weight values W1, W2, W3, W4, W5, W6, W7 obtained during the training phase.

In one or more embodiments, the method comprises interrupting the operation of applying Jacobian regularization during the inference phase, e.g., as the weight values are stable and are not changed anymore.

In a first example, a method comprises: providing a set of measured characteristic curves values of a semiconductor device having a control node and a current flow path therethrough between a first current node and a second current node, the measured characteristic curves values comprising measured electric current values through the current flow path as a function of electric voltage values across first and second current nodes with a set of control voltage levels applied at said control node of the semiconductor device;

applying an artificial neural network, ANN processing pipeline to the set of measured characteristic curves values, obtaining a set of reconstructed physical parameter values of the semiconductor device as a result.

In the first example considered, the ANN processing pipeline comprises a plurality of ANN processing stages each having at least one respective set of ANN processing weights, and the method further comprises: computing reconstructed characteristic curves values of the semiconductor device based on the set of reconstructed physical parameter values and a set of device modeling equations; performing a comparison of reconstructed characteristic curves values and measured characteristic curves values, and based on the performed comparison, providing an indicator of a variation of physical values of the semiconductor device.

In a second example, each ANN processing stage of the plurality of ANN processing stages is trained to reconstruct a different parameter in the set of reconstructed physical parameter values.

In a third example, the method comprises adjusting weight values of the plurality of respective sets of ANN weight values of the plurality of ANN processing stages during a training phase in which the weight values of the plurality of respective sets of ANN weight values are iteratively adjusted to minimize a loss function with respect to training data provided thereto.

For instance, during the training phase, ANN processing stages of the plurality of ANN processing stages are coupled according to a daisy chain topology in which the output of an i-th stage is provided as input to the subsequent (i+1)-th stage together with training data.

In a fourth example, during the training phase, an i-th plurality of weights of a respective i-th ANN processing stage are initialized to the values to which an (i-1)-th plurality of weights of an (i-1)-th ANN stage in the daisy chain configuration have been adjusted as a result of training with training data.

In a fifth example, the training data comprises measured characteristic curves values of said semiconductor device with known values of physical parameter values thereof.

In a sixth example, the method comprises applying a Jacobian regularization scheme during the training phase of said ANN processing stages of the plurality of ANN processing stages.

In a seventh example, wherein the set of reconstructed physical parameter values and said set of device modeling equations comprises P-spice parameters and equations, preferably P-spice Level-3 parameters including threshold voltage, saturation voltage, transconductance, drain current, channel length and width, body effect parameter, current gain and surface potential.

In an eighth example, applying ANN processing comprises:

applying at least one fully-connected, FC artificial neural network processing stage to the set of measured characteristic curves values, and/or

applying image representation processing to the set of measured characteristic curves values, obtaining at least one image of the characteristic curves as a result, and applying convolutional neural network, CNN processing to the at least one image obtained.

In a ninth example, a computer program product comprises instructions which, when the program is executed by a computer, cause the computer to carry out the method exemplified herein.

In a tenth example, a computer-readable medium has stored therein said adjusted weight values of the plurality of ANN processing stages obtained using the method as exemplified herein.

In an eleventh example, a method of operating a processing device (e.g., a microcontroller), wherein the processing device is configured to perform artificial neural network, ANN processing as a function of a plurality of ANN weight values, comprises:

accessing adjusted weight values of the plurality of respective sets of ANN weight values obtained using the method as exemplified herein, and

performing artificial neural network, ANN processing as a function of said accessed weight values of the plurality of respective sets of ANN weight values.

In a twelfth example, a computer program product comprises instructions which, when the program is executed by a processing device, cause the processing device to carry out the method exemplified herein.

In a thirteenth example, a computer-readable medium comprising instructions which, when executed by a processing device, cause the processing device to carry out the method exemplified herein.

In a fourteenth example, a processing device comprises memory circuitry having stored therein:

adjusted values of the plurality of respective sets of ANN weight values obtained using the method exemplified herein, and

instructions which, when executed in the processing device, cause the processing device to:

access said adjusted weight values of the plurality of respective sets of ANN weight values obtained using the method exemplified herein, and

perform ANN processing as a function of said adjusted values of the plurality of respective sets of ANN weight values.

For instance, the processing device comprises a microcontroller device.

Inventors have tested various topologies for the different ANN processing stages in the ANN processing pipeline 34, which are summarized in the following Tables I, II and III that can be found at the end of the description.

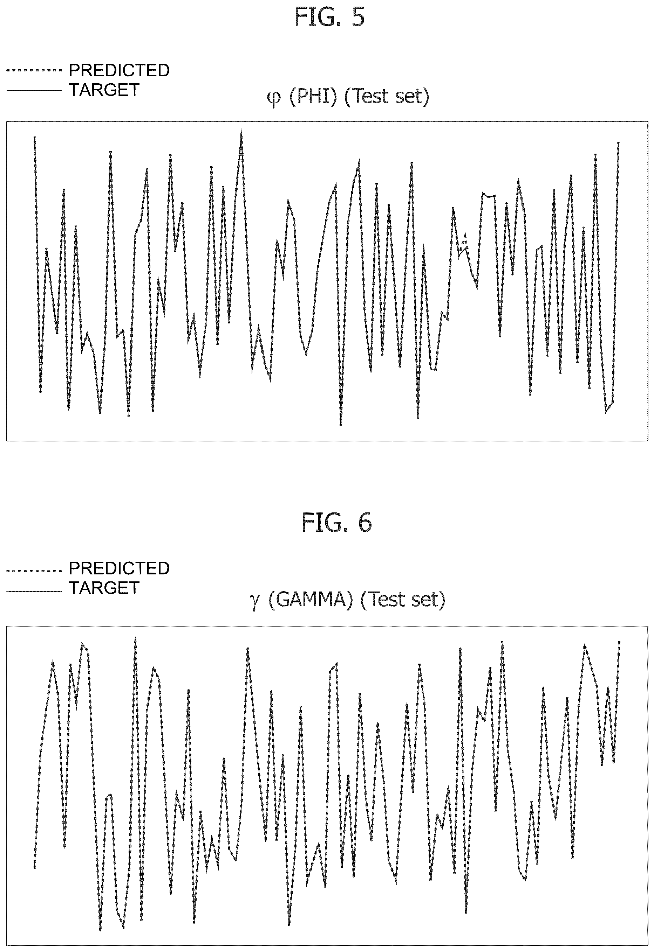

Figures 5 to 11 are diagrams in which known parameter values are compared with the respective estimate values for each model parameter in the set of model parameters VDsat, Vt, $\gamma$, $\varphi$, KP, W, L.

Specifically:

Figure 5 is a plot (number of test dataset on the ordinate axis in arbitrate unit, absolute value of the parameter on the abscissa axis in arbitrate units) of the measured surface potential $\varphi$ (dashed line) versus the estimate value of the same model parameter provided by the respective ANN processing stage 344;

Figure 6 is a plot (number of test dataset on the ordinate axis in arbitrate unit, absolute value of the parameter on the abscissa axis in arbitrate units) of the measured bulk threshold parameter $\gamma$ (dashed line) versus the estimate value of the same model parameter provided by the respective ANN processing stage 343;

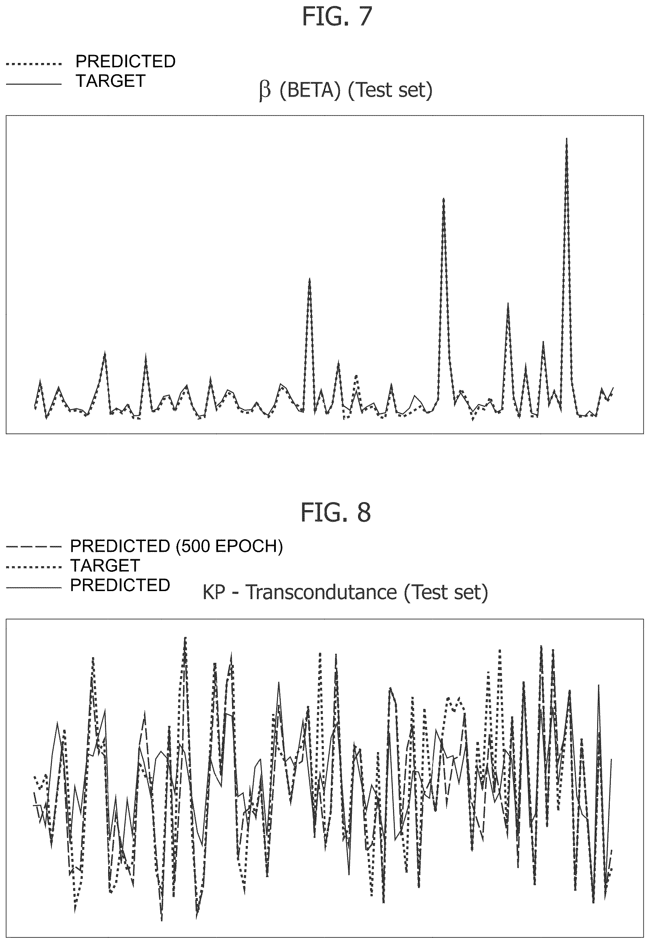

Figure 7 is a plot (number of test dataset on the ordinate axis in arbitrate unit, absolute value of the parameter on the abscissa axis in arbitrate units) of the measured geometric factor $\beta$ (dashed line) versus the estimate value of the same model parameter provided by a respective ANN processing stage (e.g., 342);

Figure 8 is a plot (number of test dataset on the ordinate axis in arbitrate unit, absolute value of the parameter on the abscissa axis in arbitrate units) of the measured transconductance KP (dashed line) versus the estimate value of the same model parameter provided by the respective ANN processing stage 346 at different processing epochs;

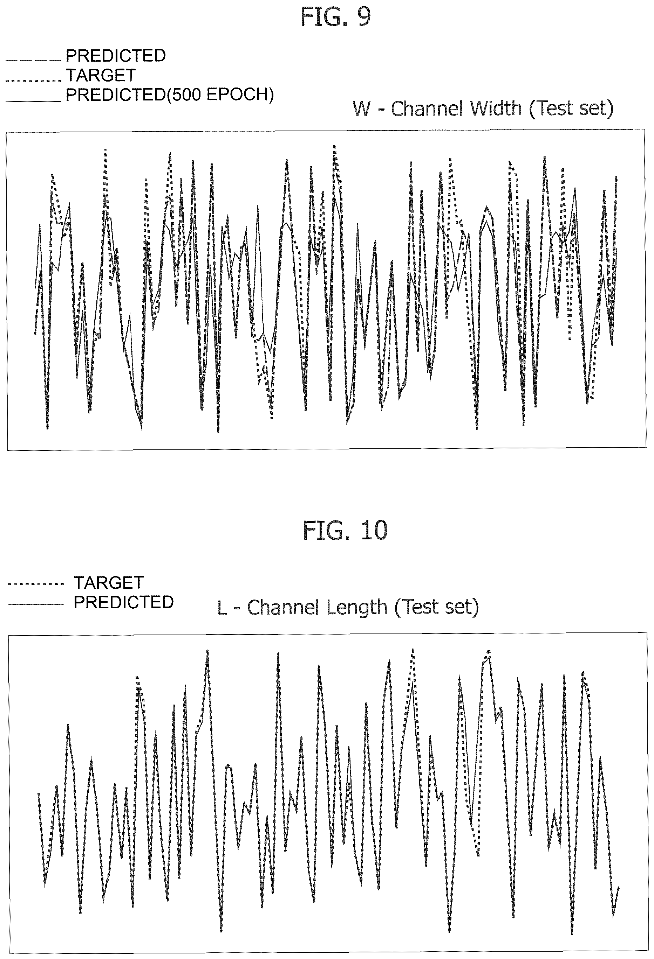

Figure 9 is a plot (number of test dataset on the ordinate axis in arbitrate unit, absolute value of the parameter on the abscissa axis in arbitrate units) of the measured channel width W (dashed line) versus the estimate value of the same model parameter provided by the respective ANN processing stage 347 at different processing epochs;

Figure 10 is a plot (number of test dataset on the ordinate axis in arbitrate unit, absolute value of the parameter on the abscissa axis in arbitrate units) of the measured channel length L (dashed line) versus the estimate value of the same model parameter provided by the respective ANN processing stage 348;

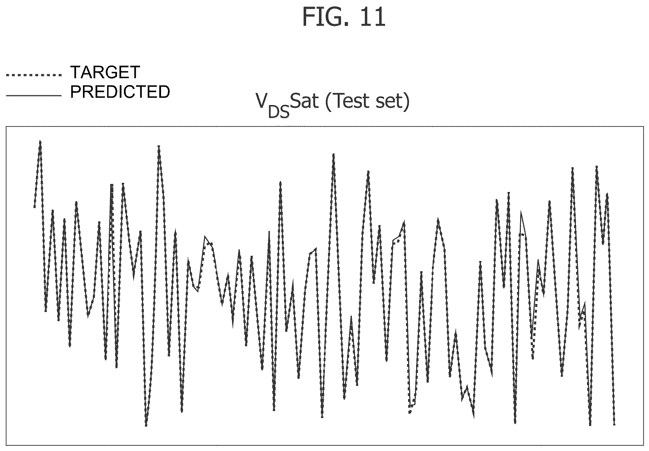

Figure 11 is a plot (number of test dataset on the ordinate axis in arbitrate unit, absolute value of the parameter on the abscissa axis in arbitrate units) of the measured saturation voltage VDsat (dashed line) versus the estimate value of the same model parameter provided by the respective ANN processing stage 340.

Table IV at the end of the description summarizes the experimental results of running the ANN processing pipeline using various configurations for the structure of ANN processing stages in the ANN processing pipeline

It may be possible to exploit also different loss functions in addition to the one discussed in the foregoing. Table V at the end of the description summarizes the lower error values reached for estimating different parameter values using different loss functions

It will be otherwise understood that the various individual implementing options exemplified throughout the figures accompanying this description are not necessarily intended to be adopted in the same combinations exemplified in the figures. One or more embodiments may thus adopt these (otherwise non-mandatory) options individually and/or in different combinations with respect to the combination exemplified in the accompanying figures.

Without prejudice to the underlying principles, the details and embodiments may vary, even significantly, with respect to what has been described by way of example only, without departing from the extent of protection. The extent of protection is defined by the annexed claims.

TABLE I: architecture of the ANN processing pipeline when configured to apply regression processing to the input measured data MS

| BLOCK | LAYER DESCRIPTION | OUTPUT SIZE |
|---|---|---|
| Input | | 122 |
| Fully connected (FC) | Linear, LayerNorm, ReLu | 122 to 8192 |
| FC | Linear, LayerNorm, ReLu | 8192 to 8192 |

(continued)

| BLOCK | LAYER DESCRIPTION | OUTPUT SIZE |
|---|---|---|
| FC | Linear, LayerNorm, ReLu | 8192 to 4096 |
| FC | Linear, LayerNorm, ReLu | 4096 to 4096 |
| FC | Linear, LayerNorm, ReLu | 4096 to 2048 |
| FC | Linear, LayerNorm, ReLu | 2048 to 2048 |
| FC | Linear, LayerNorm, ReLu | 2048 to 1024 |
| FC | Linear, LayerNorm, ReLu | 1024 to 1024 |
| FC | Linear, LayerNorm, ReLu | 1024 to 512 |
| FC | Linear, LayerNorm, ReLu | 512 to 512 |
| FC | Linear, LayerNorm, ReLu | 512 to 256 |
| FC | Linear, LayerNorm, ReLu | 256 to 128 |
| FC | Linear, LayerNorm, ReLu | 128 to 128 |
| FC | Linear, LayerNorm, ReLu | 128 to 64 |
| FC | Linear, LayerNorm, ReLu | 64 to 64 |
| FC | Linear, LayerNorm, ReLu | 64 to 32 |
| FC | Linear, LayerNorm, ReLu | 32 to 32 |
| FC | Linear, LayerNorm, ReLu | 32 to 16 |
| FC | Linear, LayerNorm, ReLu | 16 to 16 |
| FC | Linear | 16 to 8 |

TABLE II: architecture of the ANN processing pipeline when configured to apply regression processing to the input measured data MS with a reduced number of ANN processing stages with respect to those listed in Table I

| BLOCK | LAYER DESCRIPTION | OUTPUT SIZE |
|---|---|---|
| Input | | 122 |
| Fully connected (FC) | Linear, LayerNorm, ReLu | 122 to 96 |
| FC | Linear, LayerNorm, ReLu | 96 to 64 |
| FC | Linear, LayerNorm, ReLu | 64 to 32 |
| FC | Linear, LayerNorm, ReLu | 32 to 16 |
| FC | Linear | 16 to 8 |

TABLE III: architectures of the ANN processing pipeline when configured to apply convolutional neural network, CNN processing to the input measured data MS, where s= size, p= padding and d= dilation

| BLOCK | LAYER DESCRIPTION | KERNEL | OUTPUT |
|---|---|---|---|
| Input | | | 122 |
| Temporal block | Conv1d, WeightNorm, ReLU | s=8, p="same", d=1 | 122 to 96 |
| | Conv1d, WeightNorm, ReLU | s=8, p="same", d=1 | 96 to 96 |
| | Conv1d, ReLU | s=1 | 96 |
| Temporal block | Conv1d, WeightNorm, ReLU | s=8, p="same", d=2 | 96 to 64 |
| | Conv1d, WeightNorm, ReLU | s=8, p="same", d=2 | 64 to 64 |
| | Conv1d, ReLU | s=1 | 64 |

(continued)

| BLOCK | LAYER DESCRIPTION | KERNEL | OUTPUT |
|---|---|---|---|
| Temporal block | Conv1d, WeightNorm, ReLU | s=8, p="same", d=4 | 64 to 32 |
| | Conv1d, WeightNorm, ReLU | s=8, p="same", d=4 | 32 to 32 |
| | Conv1d, ReLU | s=1 | 32 |
| Temporal block | Conv1d, WeightNorm, ReLU | s=8, p="same", d=8 | 32 to 16 |
| | Conv1d, WeightNorm, ReLU | s=8, p="same", d=8 | 16 to 16 |
| | Conv1d, ReLU | s=1 | 16 |
| FC | Linear | | 16 to 8 |

TABLE IV

| ARCHITECTURE | EPOCH | TRAINING PHASE | VALIDATION PHASE | INFERENCE PHASE |
|---|---|---|---|---|
| Regression | 92 | 0.0185 | 0.0181 | 0.0181 |
| →up to 500 epochs | 482 | 0.0172 | 0.0174 | 0.0172 |
| Regression small | 95 | 0.0182 | 0.0182 | 0.0182 |
| →up to 500 epochs | 475 | 0.0175 | 0.0175 | 0.0175 |
| Conv1d small | 88 | 0.0193 | 0.0191 | 0.0191 |
| →up to 500 epochs | 451 | 0.0176 | 0.0176 | 0.0176 |
| TCN | 100 | 0.0239 | 0.0239 | 0.0238 |
| →up to 500 epochs | 489 | 0.0205 | 0.0204 | 0.0204 |

TABLE V

| Para meter | Epo ch | Log-Cosh | MSE (Mean Squared Error) | MSLE (Mean Squared Log Error) | MAE (Mean Absolute Error) | MAPE (Mean Absolute Error) |
|---|---|---|---|---|---|---|
| $V_{DSsat}$ | 78 | 0.00009 085 | 0.00018182 | 0.00011379 | 0.00701061 | 0.0526958 7 |
| $V_T$ | 54 | 0.01108 740 | 0.02249435 | 0.01150568 | 0.10899243 | 11.939336 56 |
| $\Phi$ | 95 | 0.00009 645 | 0.00019346 | 0.00007666 | 0.0534599 | 26.500935 71 |
| $\gamma$ | 94 | 0.00000 154 | 0.00000311 | 0.00000140 | 0.00114679 | 10.108733 46 |
| $\beta$ | 87 | 0.00002 814 | 0.00005708 | 0.0004187 | 0.00125461 | 1.0705429 7 |
| KP-100e p | 100 | 0.02893 488 | 0.05925322 | 0.02780851 | 0.20030967 | 924.89557 902 |
| KP-500 ep | 496 | 0.01291 872 | 0.02653794 | 0.01255106 | 0.10798134 | 586.11209 011 |
| W - 100e p | 98 | 0.01571 515 | 0.03203325 | 0.01395409 | 0.13351878 | 7.3269579 4 |
| W - 500e p | 403 | 0.00695 070 | 0.01430181 | 0.00629745 | 0.06616754 | 4.2037297 9 |
| L | 98 | 0.00230 068 | 0.00469289 | 0.00204313 | 0.02857636 | 39.133000 27 |

**Claims**

1. A method, comprising:

   providing a set of measured characteristic curves values (MS) of a semiconductor device (10) having a control node (G) and a current flow path therethrough between a first current node (D) and a second current node (S), the measured characteristic curves values (MS) comprising measured electric current values ($I_D$) through the current flow path as a function of electric voltage values ($V_{DS}$) across first (D) and second (S) current nodes with a set of control voltage levels ($V_{GS}$) applied at said control node (G) of the semiconductor device (10);

applying an artificial neural network, ANN processing pipeline (30) to the set of measured characteristic curves values (MS), obtaining a set of reconstructed physical parameter values (VDsat, Vt, $\gamma$, $\varphi$, KP, W, L) of the semiconductor device (10) as a result,

wherein the ANN processing pipeline (30) comprises a plurality of ANN processing stages (340, 342, 343, 344, 346, 347, 348) each having at least one respective set of ANN processing weights (W1, W2, W3, W4, W5, W6; WG);

wherein the method further comprises:

computing reconstructed characteristic curves values of the semiconductor device (10) based on the set of reconstructed physical parameter values (VDsat, Vt, $\gamma$, $\varphi$, KP, W, L) and a set of device modeling equations;

performing a comparison (36) of reconstructed characteristic curves values and measured characteristic curves values (MS), and

based on the performed comparison, providing an indicator (D) of a variation of physical values of the semiconductor device (10).

2. The method of claim 1, wherein each ANN processing stage of the plurality of ANN processing stages (340, 342, 343, 344, 346, 347, 348) is trained to reconstruct a different parameter in the set of reconstructed physical parameter values (VDsat, Vt, $\gamma$, $\varphi$, KP, W, L).

3. The method of claim 2, wherein:

the method comprises adjusting weight values of the plurality of respective sets of ANN weight values (W1, W2, W3, W4, W5, W6; WG) of the plurality of ANN processing stages (340, 342, 343, 344, 346, 347, 348) during a training phase in which the weight values of the plurality of respective sets of ANN weight values (W1, W2, W3, W4, W5, W6; WG) are iteratively adjusted to minimize a loss function with respect to training data (TD) provided thereto, and

during the training phase, ANN processing stages of the plurality of ANN processing stages (340, 342, 343, 344, 346, 347, 348) are coupled according to a daisy chain topology in which the output of an i-th stage (344) is provided as input to the subsequent (i+1)-th stage (346) together with training data (TD).

4. The method of claim 3, wherein, during the training phase, an i-th plurality of weights (W4) of a respective i-th ANN processing stage (344) are initialized to the values to which an (i-1)-th plurality of weights (W3) of an (i-1)-th ANN stage (343) in the daisy chain configuration have been adjusted as a result of training with training data (TD).

5. The method according to claim 3 or claim 4, wherein said training data (TD) comprises measured characteristic curves values (MS) of said semiconductor device (10) with known values of physical parameter values (VDsat, Vt, $\gamma$, $\varphi$, KP, W, L) thereof.

6. The method of any one of claims 3 to 5, comprising applying a Jacobian regularization scheme during the training phase of said ANN processing stages of the plurality of ANN processing stages (340, 342, 343, 344, 346, 347, 348).

7. The method of any one of claims 3 to 6, wherein the set of reconstructed physical parameter values (VDsat, Vt, $\gamma$, $\varphi$, KP, W, L) and said set of device modeling equations comprises P-spice parameters and equations, preferably P-spice Level-3 parameters including threshold voltage (VT), saturation voltage (VDSat), transconductance (KP), drain current (Id), channel length (L) and width (W), body effect parameter ($\gamma$), current gain ($\beta$) and surface potential ($\varphi$)..

8. The method according to any one of the preceding claims, wherein applying ANN processing (30) comprises:

applying at least one fully-connected, FC artificial neural network processing stage to the set of measured characteristic curves values (MS), and/or

applying image representation processing (32) to the set of measured characteristic curves values (MS), obtaining at least one image of the characteristic curves as a result, and applying convolutional neural network, CNN processing to the at least one image obtained.

9. A computer program product comprising instructions which, when the program is executed by a computer, cause the computer to carry out the method of any one of claims 1 to 8.

10. A computer-readable medium having stored therein said adjusted weight values of the plurality of ANN processing stages (340, 342, 343, 344, 346, 347, 348) obtained using the method of any of claims 1 to 8.

11. A method of operating a processing device (100), preferably a microcontroller, wherein the processing device (100) is configured to perform artificial neural network, ANN processing as a function of a plurality of ANN weight values (W1, W2, W3, W4, W5, W6; WG), wherein the method comprises:

accessing adjusted weight values of the plurality of respective sets of ANN weight values (W1, W2, W3, W4, W5, W6; WG) obtained using the method of any of claims 1 to 8, and
performing artificial neural network, ANN processing (30) as a function of said accessed weight values of the plurality of respective sets of ANN weight values (W1, W2, W3, W4, W5, W6; WG).

12. A computer program product comprising instructions which, when the program is executed by a processing device (100), cause the processing device (100) to carry out the method of claim 11.

13. A computer-readable medium comprising instructions which, when executed by a processing device (100), cause the processing device (100) to carry out the method of claim 11.

14. A processing device (100) comprising memory circuitry having stored therein:

adjusted values of the plurality of respective sets of ANN weight values (W1, W2, W3, W4, W5, W6; WG) obtained using the method of any of claims 1 to 8, and
instructions which, when executed in the processing device (100), cause the processing device (100) to:

access said adjusted weight values of the plurality of respective sets of ANN weight values (W1, W2, W3, W4, W5, W6; WG) obtained using the method of any of claims 1 to 8, and
perform ANN processing (30) as a function of said adjusted values of the plurality of respective sets of ANN weight values (W1, W2, W3, W4, W5, W6; WG).

15. The processing device (100) of claim 14, comprising a microcontroller device.

# FIG. 1

# FIG. 2

# FIG. 3

FIG. 4

# FIG. 5

·········· PREDICTED
———— TARGET

φ (PHI) (Test set)

# FIG. 6

·········· PREDICTED
———— TARGET

γ (GAMMA) (Test set)

## FIG. 7

.......... PREDICTED
———— TARGET

β (BETA) (Test set)

## FIG. 8

———— PREDICTED (500 EPOCH)
.......... TARGET
———— PREDICTED

KP - Transcondutance (Test set)

# FIG. 9

---- PREDICTED
.......... TARGET
_____ PREDICTED(500 EPOCH)

W - Channel Width (Test set)

# FIG. 10

.......... TARGET
_____ PREDICTED

L - Channel Length (Test set)

FIG. 11

.......... TARGET
———— PREDICTED

$V_{DS}$Sat (Test set)

Europäisches
Patentamt

European
Patent Office

Office européen
des brevets

# EUROPEAN SEARCH REPORT

**Application Number**

EP 25 21 3104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MASSIMO ORAZIO SPATA ET AL: "Deep Learning Algorithm for Advanced Level-3 Inverse-Modeling of Silicon-Carbide Power MOSFET Devices", ARXIV.ORG, CORNELL UNIVERSITY LIBRARY, 201 OLIN LIBRARY CORNELL UNIVERSITY ITHACA, NY 14853, 16 October 2023 (2023-10-16), XP091645762, * abstract * * section 1, 3.1, 3.2, 4, 4.2, 4.4 eq.5; figures 1-4; table 1 * | 1-15 | INV. G06F30/27 G06F30/33 G06F30/367 ADD. G06F119/04 |
| A | KR 2022 0048941 A (SAMSUNG ELECTRONICS CO LTD [KR]) 20 April 2022 (2022-04-20) * abstract * * [0050], [0085]-[0089]; claims 6, 10; figure 2a * | 1-15 | |
| A | US 11 176 447 B2 (HONG KONG APPLIED SCIENCE & TECH RESEARCH INST CO LTD [HK]) 16 November 2021 (2021-11-16) * abstract * * col. 2-8 * | 1-15 | **TECHNICAL FIELDS SEARCHED (IPC)** G06F |

The present search report has been drawn up for all claims

| Place of search | Date of completion of the search | Examiner |
|---|---|---|
| Munich | 27 March 2026 | Brandiska, Pavlina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 749 510 A1

## ANNEX TO THE EUROPEAN SEARCH REPORT
## ON EUROPEAN PATENT APPLICATION NO.

EP 25 21 3104

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2026

| Patent document cited in search report | Publication date | Patent family member(s) | Publication date |
|---|---|---|---|
| KR 20220048941 A | 20-04-2022 | KR 20220048941 A | 20-04-2022 |
| | | US 2022114317 A1 | 14-04-2022 |
| US 11176447 B2 | 16-11-2021 | US 2019385047 A1 | 19-12-2019 |
| | | WO 2019241937 A1 | 26-12-2019 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20240119274 A1

**Non-patent literature cited in the description**

- Comparison of level 1, 2 and 3 mosfet's. **T. PATEL**. Course: Advanced Electronics. Department of Electrical Engineering, The University of Texas, 2014
- **K. JEPPSON**. A learning tool MOSFET model: A stepping-stone from the square-law model to BSIM4. *2013 23rd International Workshop on Power and Timing Modeling, Optimization and Simulation (PATMOS), Karlsruhe*, 2013, 39-44
- **A. LAKHLEF** ; **A. BENFDILA**. Drain current modelling in silicon MOSFETs. *2014 29th International Conference on Microelectronics Proceedings - MIEL 2014, Belgrade, Serbia*, 2014, 213-216
- **C. LEONARDI et al.** A new power MOSFET model including the variation of parameters with the temperature. *Proceedings of the 1998 Second IEEE International Caracas Conference on Devices, Circuits and Systems 98, On the 70th Anniversary of the MOSFET and 50th of the BJT*, 1998, 261-266
- **SPATA, MASSIMO O. et al.** Deep learning algorithm for advanced level-3 inverse-modeling of silicon-carbide power MOSFET devices. *Workshop on Electronics Communication Engineering*, 2023
- **J. E. SUSENO et al.** Artificial intelligence techniques for SPICE optimization of MOSFET modeling. *2009 Innovative Technologies in Intelligent Systems and Industrial Applications*, 2009, 76-80
- **HOFFMAN, JUDY et al.** Robust Learning with Jacobian Regularization. *ArXiv, abs 1908.02729*, 2019
- **CUI, C. et al.** Generalizing and Improving Jacobian and Hessian Regularization. *ArXiv, abs/2212.00311*, 2022